(19) Europäisches Patentamt
European Patent Office
Office européen des brevets

(11) **EP 4 641 967 A1**

(12) **EUROPEAN PATENT APPLICATION**
published in accordance with Art. 153(4) EPC

(43) Date of publication:
**29.10.2025 Bulletin 2025/44**

(51) International Patent Classification (IPC):
*H04L 9/00* $^{(2022.01)}$

(21) Application number: **23907655.7**

(52) Cooperative Patent Classification (CPC):
**H04L 9/00**

(22) Date of filing: **18.12.2023**

(86) International application number:
**PCT/KR2023/020879**

(87) International publication number:
**WO 2024/136370 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.12.2022 KR 20220183368**
**20.02.2023 KR 20230022440**
**01.12.2023 KR 20230172301**

(71) Applicant: **CRYPTO LAB INC.**
**Gwanak-gu, Seoul 08826 (KR)**

(72) Inventor: **KIM, Jaehyung**
**Seoul 08754 (KR)**

(74) Representative: **Dragotti & Associati S.R.L.**
**Via Nino Bixio, 7**
**20129 Milano (IT)**

(54) **METHOD AND ELECTRONIC DEVICE FOR PROCESSING HOMOMORPHIC ENCRYPTED TEXT**

(57) An electronic apparatus of the present disclosure comprises: a memory for storing a plurality of homomorphic ciphertexts; and a processor for performing homomorphic multiplication operations on the plurality of homomorphic ciphertexts, wherein the processor uses the plurality of homomorphic ciphertexts decomposed into quotient data divided by a preset modulus and remainder data, so as to generate a plurality of intermediate operation results using quotient operation data using quotient data of each of the plurality of homomorphic ciphertexts, quotient data of one text among the plurality of homomorphic ciphertexts, and the remainder data of the remaining homomorphic ciphertexts, and uses the quotient operation data and the plurality of intermediate operation results so as to generate a homomorphic ciphertext according to the result of the homomorphic multiplication operations.

FIG. 8

**Description**

[Technical Field]

The present disclosure relates to a method and an electronic apparatus for processing a homomorphic ciphertext, and more particularly, to a method and an electronic apparatus for processing a homomorphic ciphertext capable of reducing modulus consumption during a process of performing a homomorphic multiplication operation.

[Background Art]

As communication technology develops and electronic apparatuses spread, efforts are continuously made to maintain communication security between the electronic apparatuses. Accordingly, encryption/decryption technology is used in most communication environments.

When messages encrypted by the encryption technology are delivered to the other party, the other party needs to perform decryption in order to use the messages. In this case, the other party wastes resources and time during decrypting the encrypted data. In addition, when the third party hacks messages while the other party temporarily decrypts the messages for operation, there is a problem in that the messages may be easily leaked to the third party.

In order to solve this problem, a homomorphic encryption method is being studied. According to the homomorphic encryption method, even if an operation is performed on ciphertexts themselves without decrypting the encrypted information, it is possible to obtain the same result as the encrypted value after an operation on a plain text. Accordingly, various types of operations may be performed without decrypting the ciphertexts.

However, when the homomorphic operation is performed, the plain text space in the homomorphic ciphertext is reduced, and when the plain text space is reduced below a certain size, the operation may no longer be performed. In this respect, recently, a bootstrapping method capable of extending the plain text space of the homomorphic ciphertext has been used.

In particular, since the homomorphic operation such as homomorphic multiplication consumes a lot of modulus, a more efficient homomorphic multiplication operation method has been required.

[Disclosure]

[Technical Problem]

Therefore, the present disclosure provides a method and an electronic apparatus for processing a homomorphic ciphertext capable of reducing modulus consumption during a process of performing a homomorphic multiplication operation.

[Technical Solution]

According to an aspect of the present disclosure, an electronic apparatus includes a memory configured to store a plurality of homomorphic ciphertexts, and a processor configured to perform a homomorphic multiplication operation on the plurality of homomorphic ciphertexts.

The processor may be configured to use the plurality of homomorphic ciphertexts divided by a preset modulus to be decomposed into quotient data and remainder data so as to generate quotient operation data using the quotient data of each of the plurality of homomorphic ciphertexts and a plurality of intermediate operation results using the quotient data of one of the plurality of homomorphic ciphertexts and the remainder data of the other homomorphic ciphertext, and use the quotient operation data and the plurality of intermediate operation results to generate the homomorphic ciphertext according to a homomorphic multiplication operation result.

The processor may be configured to divide each of the plurality of homomorphic ciphertexts by the preset modulus to calculate the remainder data, and perform an operation of subtracting the calculated remainder data for each of the plurality of homomorphic ciphertexts and the results of subtraction operation subtracting calculated results by the preset modulus to calculate the quotient data.

The processor may be configured to perform a tensor operation on the quotient data of each of the plurality of homomorphic ciphertexts to generate one quotient operation data, and perform the tensor operation on the quotient data of one homomorphic ciphertext and the remainder data of the other homomorphic ciphertext to generate the plurality of intermediate operation results, for each of the plurality of homomorphic ciphertexts.

The processor may be configured to re-linearize the quotient operation data to generate first linear data, sum the plurality of intermediate operation results, and re-linearize the summed intermediate operation results to generate second linear data, and use the first linear data to generate the quotient data corresponding to the homomorphic multiplication operation result and use the first linear data and the second linear data to generate the remainder data corresponding to the homomorphic multiplication operation result.

The processor may be configured to re-scale the first linear data to generate the quotient data corresponding to the homomorphic multiplication operation result, and generate the remaining data corresponding to the homomorphic multiplication by, multiplying the first linear data with the preset modulus, summing the result of multiplying and the second linear data, rescaling the result of summing, subtracting result of multiplying rescaled of the first linear data with the preset modulus at the result of recalling the result of summing..

The processor may be configured to store the homomorphic ciphertext according to the homomorphic multiplication operation result by dividing the homomorphic ciphertext into the generated quotient data and remainder data.

The processor may be configured to divide each of the plurality of homomorphic ciphertexts by the preset modulus to be decomposed into the quotient data and the remainder data.

The memory may be configured to store each of the plurality of homomorphic ciphertexts in a form in which the plurality of homomorphic ciphertext are divided by the preset modulus to be decomposed into the quotient data and the remainder data.

The preset modulus may be the homomorphic ciphertext that is a modulus applied to the plurality of homomorphic ciphertexts.

According to another aspect of the present disclosure, a method for processing an ciphertext in an electronic apparatus includes receiving a command for a homomorphic multiplication operation on a plurality of homomorphic ciphertexts, calculating quotient operation data using the quotient data of each of the plurality of homomorphic ciphertexts and a plurality of intermediate operation results using the quotient data of one of the plurality of homomorphic ciphertexts and the remainder data of the other homomorphic ciphertext, by using the plurality of homomorphic ciphertexts divided by a preset modulus to be decomposed into quotient data and remainder data, and generating the homomorphic ciphertext according to a homomorphic multiplication operation result by using the quotient operation data and the plurality of intermediate operation results

The method may further include dividing each of the plurality of homomorphic ciphertexts by the preset modulus to be decomposed into the quotient data and the remainder data, in which, in the decomposing, each of the plurality of homomorphic ciphertexts may be divided by the preset modulus to calculate the remainder data, a subtraction operation may be performed on the calculated remainder data for each of the plurality of homomorphic ciphertexts, and the quotient data may be calculated by performing an operation of dividing the results of subtraction operation by the preset modulus.

The calculating may include performing a tensor operation on the quotient data of each of the plurality of homomorphic ciphertexts to calculate one quotient operation data, and performing the tensor operation on the quotient data of one homomorphic ciphertext and the remainder data of the other homomorphic ciphertext to calculate the plurality of intermediate operation results, for each of the plurality of homomorphic ciphertexts.

The generating of the homomorphic ciphertext include re-linearizing the quotient operation data to generate first linear data, summing the plurality of intermediate operation results, and re-linearizing the summed intermediate operation results to generate second linear data, generating the quotient data corresponding to the homomorphic multiplication operation result using the first linear data, and generating the remainder data corresponding to the homomorphic multiplication operation result using the first linear data and the second linear data.

The generating of the quotient data, the first linear data is re-scaled to generate the quotient data corresponding to the homomorphic multiplication operation result, and in the generating of the remainder data, the remainder corresponding the homomorphic multiplication operation result is generated by, multiplying the first linear data with the preset modulus, summing the result of multiplying and the second linear data, rescaling the result of summing, subtracting result of multiplying rescaled of the first linear data with the preset modulus at the result of recalling the result of summing.

According to still another aspect of the present disclosure, there is provided a computer-readable recording medium including a program for executing a method for processing an ciphertext, in which the method for processing an ciphertext includes receiving a command for a homomorphic multiplication operation on a plurality of homomorphic ciphertexts, calculating quotient operation data using quotient data of each of the plurality of homomorphic ciphertexts and a plurality of intermediate operation results using the quotient data of one of the plurality of homomorphic ciphertexts and the remainder data of the other homomorphic ciphertext, by using the plurality of homomorphic ciphertexts divided by a preset modulus to be decomposed into quotient data and remainder data, and generating the homomorphic ciphertext according to a homomorphic multiplication operation result by using the quotient operation data and the plurality of intermediate operation results.

[Advantageous Effects]

According to various embodiments of the present disclosure as described above, it is possible to reduce modulus consumption in a homomorphic multiplication process. Accordingly, it is possible to reduce the number of times of operations of bootstrapping that require a lot of operation time in a homomorphic operation process.

[Description of Drawings]

FIG. 1 is a diagram for describing a structure of a network system according to an embodiment of the present disclosure;

FIG. 2 is a block diagram illustrating simple components of an electronic apparatus according to an embodiment of the present disclosure;

FIG. 3 is a block diagram for describing specific components of the electronic apparatus according to an embodiment of the present disclosure;

FIG. 4 is a diagram for describing an operation of generating a public key and a secret key;

FIG. 5 is a diagram for describing an operation of generating and decrypting an approximate homomorphic ciphertext;

FIG. 6 is a diagram for describing a bootstrapping operation;

FIG. 7 is a diagram for describing the bootstrapping operation of the present disclosure;

FIG. 8 is a diagram for describing an operation of decomposing homomorphic ciphertext of the present disclosure;

FIG. 9 is a flowchart for describing a homomorphic multiplication method of the present disclosure;

FIG. 10 is a diagram for describing a difference between the conventional operation method and an operation method of the present disclosure;

FIG. 11 is a diagram for describing an effect of the homomorphic multiplication method of the present disclosure; and

FIG. 12 is a flowchart for describing an operation of extending a plain text space of the present disclosure.

[Mode for Invention]

Hereinafter, the present disclosure will be described in detail with reference to the accompanying drawings. Encryption/decryption may be applied to an information (data) transmission process performed in the present disclosure if necessary, and all expressions describing the information (data) transmission process in the present disclosure and claims should be interpreted as including cases of encryption/decryption even if not separately stated. In the present disclosure, expressions such as "transmission (delivery) from A to B" or "A receiving from B" include transmission (delivery) or reception with another medium included therebetween, and does not necessarily express only what is directly transmitted (delivered) or received from A to B.

In the description of the present disclosure, the order of each step should be understood as non-limiting unless the preceding step needs to be logically and temporally performed necessarily before the following step. In other words, except for the above exceptional cases, even if the process described as the following step is performed before the process described as the preceding step, the nature of the disclosure is not affected, and the scope should also be defined regardless of the order of the steps. In this specification, "A or B" is defined to mean not only selectively indicating either one of A and B, but also including both A and B. In addition, in the present disclosure, the term "include" has a meaning encompassing further including other components in addition to elements listed as included.

In this disclosure, only essential components necessary for the description of the present disclosure are described, and components unrelated to the essence of the present disclosure are not mentioned. In addition, it should not be interpreted as an exclusive meaning that includes only the mentioned components, but should be interpreted as a nonexclusive meaning that may include other components.

In addition, in the present disclosure, "value" is defined as a concept including a vector as well as a scalar value. In the present disclosure, the expressions such as "compute," and "calculate" may be replaced by an expression that calculates a result of the corresponding computation or operation. In addition, unless otherwise stated, operation on a ciphertext to be described below means a homomorphic operation. For example, an addition of a homomorphic ciphertext means a homomorphic addition of two homomorphic ciphertexts.

Mathematical operations and operations of each step of the present disclosure to be described below may be implemented as computer operations by the known coding method and/or coding designed to suit the present disclosure in order to perform the corresponding operations or operations.

Specific equations to be described below are illustratively described among possible alternatives, and the scope of the present disclosure should not be construed as being limited to equations mentioned in the present disclosure.

For convenience of description, in the present disclosure, a notation is defined as follows.

$a \leftarrow D$: select element (a) according to distribution (D)

$s_1, s_2 \in R$: Each of $s_1$ and $s_2$ is an element belonging to set R

$\mathrm{mod}(q)$: Modular operation with element q

$\lfloor \cdot \rceil$ : Round-off internal value

Hereinafter, various embodiments of the present disclosure will be described in detail with reference to the accompanying drawings.

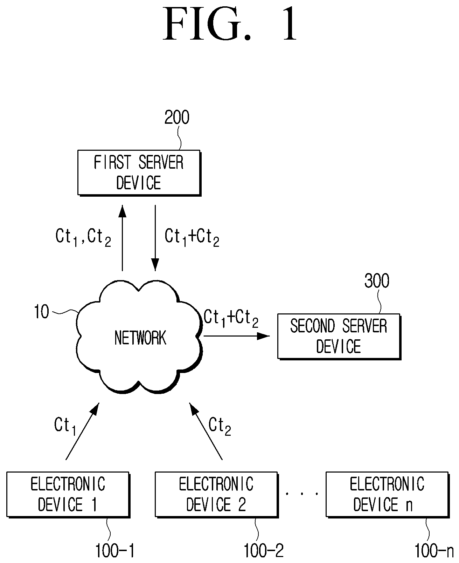

FIG. 1 is a diagram for describing a structure of a network system according to an embodiment of the present disclosure.

Referring to FIG. 1, a network system may include a plurality of electronic apparatuses 100-1 to 100-n, a first server device 200, and a second server device 300, each of which may be connected to each other through a network 10.

The network 10 may be implemented in various types of wired and wireless communication networks, broadcasting communication networks, optical communication networks, cloud networks, etc., and each device may also be connected through methods such as Wi-Fi, Bluetooth, Near Field Communication (NFC), etc., without a separate medium.

Although FIG. 1 illustrates the plurality of electronic apparatuses 100-1 to 100-n, a plurality of electronic apparatuses are not necessarily used, and one device may be used. For example, the electronic apparatuses 100-1 to 100-n may be implemented as various types of devices such as smart phones, tablets, game players, PCs, laptop PCs, home servers, and kiosks. In addition, the electronic apparatuses 100-1 to 100-n may be implemented in the form of home appliances to which an IoT function is applied.

Users may input various types of information through the electronic apparatuses 100-1 to 100-n they use. The input information may be stored in the electronic apparatuses 100-1 to 100-n themselves, but may also be transmitted to and stored in an external device for storage capacity and security reasons. In FIG. 1, the first server device 200 may serve to store such information, and the second server device 300 may serve to use some or all of the information stored in the first server device 200.

Each of the electronic apparatuses 100-1 to 100-n may homomorphically encrypt the input information and transmit the homomorphic ciphertexts to the first server device 200. In this case, each electronic apparatus 100-1 to 100-n may transmit the generated homomorphic ciphertext to the first server device 200 as it is, or perform a homomorphic operation on the generated homomorphic ciphertext and transmit the homomorphic operation result to the first server device 200.

Each of the electronic apparatuses 100-1 to 100-n may include encryption noise, i.e., an error, calculated during performing homomorphic encryption in a ciphertext. Specifically, the homomorphic ciphertexts generated by each of the electronic apparatuses 100-1 to 100-n may be generated in a form in which a result value including a message and an error value is restored when decrypted later using a secret key.

For example, when the homomorphic ciphertexts generated by the electronic apparatuses 100-1 to 100-n are decrypted using a secret key, the homomorphic ciphertexts may be generated in a form that satisfies the following natures.

$$[\text{Equation 1}]$$

$$\text{Dec}(ct, sk) = <ct, sk> = M + e(\text{mod } q)$$

Here, $<,>$ denotes a usual inner product, ct denotes a ciphertext, sk denotes a secret key, M denotes a plain text message, e denotes an encryption error value, and mod q denotes a modulus of a ciphertext. q should be selected to be greater than a result value M obtained by multiplying a scaling factor $\Delta$ by a message. When an absolute value of the error value e is sufficiently small compared to M, a decryption value M+e of the ciphertext is a value that may replace the original message with the same precision in significant figure operation. Among the decrypted data, an error may be arranged on the least significant bit (LSB) side, and M may be arranged on the next least significant bit side.

When a size of the message is too small or too large, the size may be adjusted using a scaling factor. When the scaling factor is used, not only an integer type message but also a real number type message may be encrypted, and thus, the usability of the message may be greatly increased. In addition, by adjusting the size of the message using the scaling factor, a size of an area where messages exist in the ciphertext after the operation is made, that is, a size of an effective area may also be adjusted.

According to the embodiment, a modulus q of the ciphertext may be set and used in various forms. For example, the modulus of the ciphertext may be set in the form of an exponential power $q=\Delta^L$ of the scaling factor $\Delta$. When $\Delta$ is 2, $\Delta$ may be set to a value such as $q=2^{10}$.

In addition, the homomorphic ciphertext according to the present disclosure is described on the assumption that a fixed point is used, but may be applied even when a floating point is used.

The first server device 200 may store the received homomorphic ciphertext in a ciphertext state without decrypting the received homomorphic ciphertext. Meanwhile, the first server device 200 may store not only the homomorphic ciphertext encrypted by one scheme, but also the homomorphic ciphertext encrypted by various schemes.

In this case, the first server device 200 may perform the homomorphic operation by performing a conversion operation (or a generalization operation) on the homomorphic ciphertext encrypted with different schemes. For example, when a first scheme is a scheme using 1 rank and N dimensions, the first scheme extends the rank to convert into an RLWE ciphertext having the k rank and N dimensions. On the other hand, when a second scheme is a scheme using K rank and 1 dimension, the second scheme extends the dimensions to convert into the RLWE ciphertext having the k rank and N dimensions. Meanwhile, the conversion operation may also be referred to as a key switching operation, but in order to distinguish the key switching operation from a key switching operation in the same dimension and the same rank described below, the above-described conversion is referred to as multisecret switching hereinafter.

In addition, the first server device 200 may perform the key switching on the homomorphic ciphertext in order to operate together the homomorphic ciphertext decrypted with different secret keys. Here, the key switching is an operation of exchanging the secret key used for decrypting the homomorphic ciphertext with another secret key.

Through the key switching operation, the homomorphic operation task is also possible for the homomorphic ciphertexts with different secret keys. For example, if there is a first homomorphic ciphertext decrypted with a first secret key and a second homomorphic ciphertext decrypted with a second secret key, the first server device 200 may perform the operation task by key-switching the secret key of the second homomorphic ciphertext with the first secret key, or may perform the operation task by key-switching each of the first homomorphic ciphertext and the second homomorphic ciphertext with a new third secret key.

The first server device 200 may decompose the homomorphic ciphertext into quotient data and remainder data and store the quotient data and remainder data. Here, the remainder data is data corresponding to a remainder value when the homomorphic ciphertext is divided by a preset modulus, and the quotient data is data corresponding to a value obtained by dividing a value, which is obtained by subtracting the remainder data from the homomorphic ciphertext, by the preset modulus.

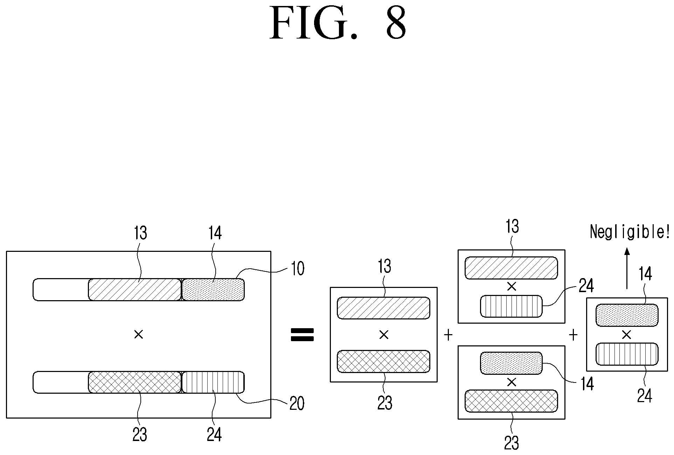

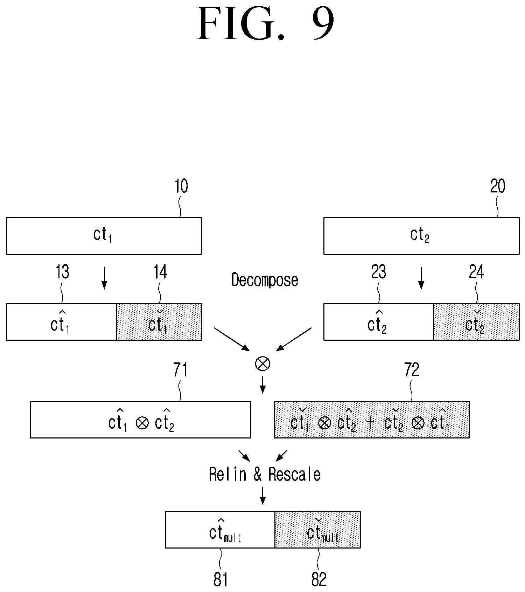

The first server device 200 may perform various homomorphic operations using the above-described quotient data and remainder data. Specifically, when the first server device 200 performs the homomorphic multiplication operation among the homomorphic operations, the first server device 200 may generate quotient operation data through an operation between quotient data of a plurality of homomorphic ciphertexts, generate a plurality of intermediate operation data through an operation between quotient data of one homomorphic ciphertext and remainder data of the other homomorphic ciphertext, and generate the homomorphic ciphertext according to the result of the homomorphic multiplication operation using the generated quotient operation data and intermediate operation data. The homomorphic multiplication operation according to the present disclosure will be described in more detail with reference to FIGS. 8 and 9.

Meanwhile, the first server device 200 decomposes the plurality of homomorphic ciphertexts into the quotient data and the remainder data and stores the quotient data and remainder data, and when it is necessary to transmit the homomorphic ciphertext to an external device, etc., the decomposed quotient data and remainder data may be combined and transmitted to another device. Meanwhile, in the above description, it is assumed that only the first server device 200 performs the above-described homomorphic operation, but the above-described electronic apparatus and second server device 300 may also perform the above-described homomorphic operation.

The second server device 300 may request a specific processing result for the homomorphic ciphertext from the first server device 200. The first server device 200 may perform specific operation according to the request of the second server device 300 and then transmit the result to the second server device 300.

For example, when ciphertexts ct1 and ct2 transmitted by the two electronic apparatuses 100-1 and 100-2 are stored in the first server device 200, the second server device 300 may request, from the first server device 200, a value obtained by summing information provided from the two electronic apparatuses 100-1 and 100-2. The first server device 200 may perform an operation for summing the two ciphertexts according to the request, and then transmit the result value ct1 + ct2 to the second server device 300.

Due to the nature of the homomorphic ciphertext, the first server device 200 may perform the operation without the decryption, and the result value is also in the form of a ciphertext. In the present disclosure, the result value obtained by the operation is referred to as an operated ciphertext.

The first server device 200 may transmit the operation result ciphertext to the second server device 300. The second server device 300 may decrypt the received operated ciphertext and acquire operated values of data included in each homomorphic ciphertext.

The first server device 200 may perform the operation several times according to a user request. In this case, proportions of approximate messages within the operation result ciphertexts acquired for each operation are different. The first server device 200 may perform a bootstrapping operation when the proportions of the approximate messages exceed a threshold value. In this way, the first server device 200 may be referred to as an operation device in that it may perform an operation task.

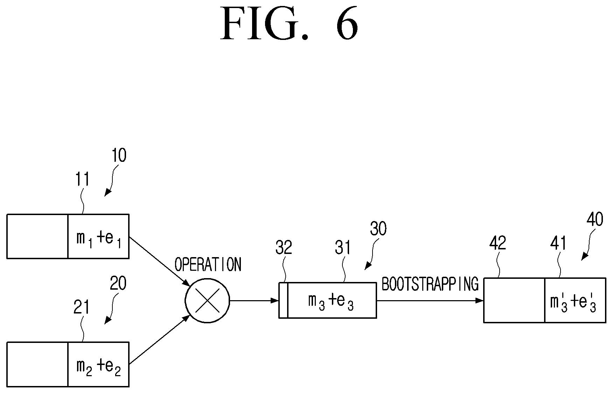

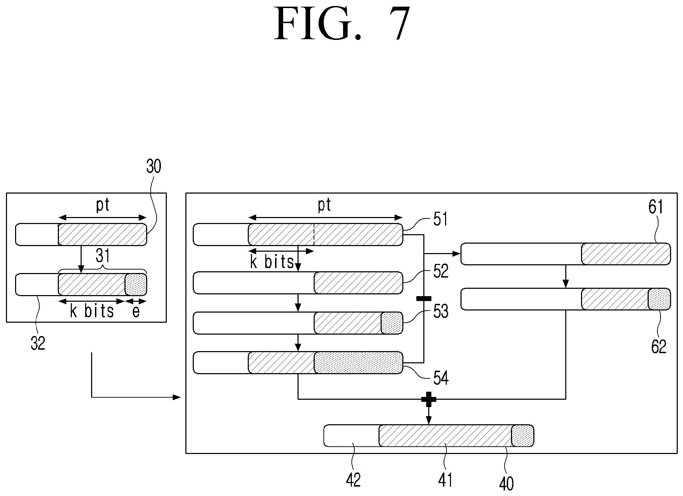

Specifically, when q is less than M in Equation 1 described above, since M+e (mod q) has a different value from M+e, the decryption becomes impossible. Therefore, the q value should always be kept greater than M. However, as the operation progresses, the q value gradually decreases. Therefore, an operation of changing the q value so that the q value is always greater than M is required, and this operation is called the bootstrapping operation. As the bootstrapping operation is performed, the ciphertext may become calculable again. A specific operation related to the bootstrapping will be described later with reference to FIGS. 6 and 7.

Meanwhile, FIG. 1 illustrates a case where the electronic apparatus performs the homomorphic encryption and the second server device performs the decryption, but is not necessarily limited thereto.

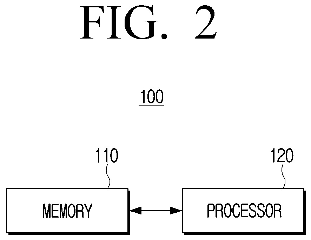

FIG. 2 is a block diagram illustrating simple components of the electronic apparatus according to an embodiment of the present disclosure.

Referring to FIG. 2, the electronic apparatus 100 may include a memory 110 and a processor 120.

The memory 110 is a component for storing an O/S for driving the electronic apparatus 100 or various instructions and/or software, data, etc., related to the generation and operation processing of the homomorphic ciphertext to be described later. The memory 110 may be implemented in various forms such as RAM, ROM, flash memory, HDD, external memory, and memory card, but is not limited to any one.

The memory 110 stores the message to be encrypted. Here, the message may be various types of credit information, personal information, and the like cited by a user, and may also be information related to location information used in the electronic apparatus 100 and a use history such as Internet usage time information.

In addition, the memory 110 may store a public key, and when the electronic apparatus 100 is a device that directly generates the public key, the memory 110 may store not only a secret key, but also various parameters necessary for generating the public key and the secret key.

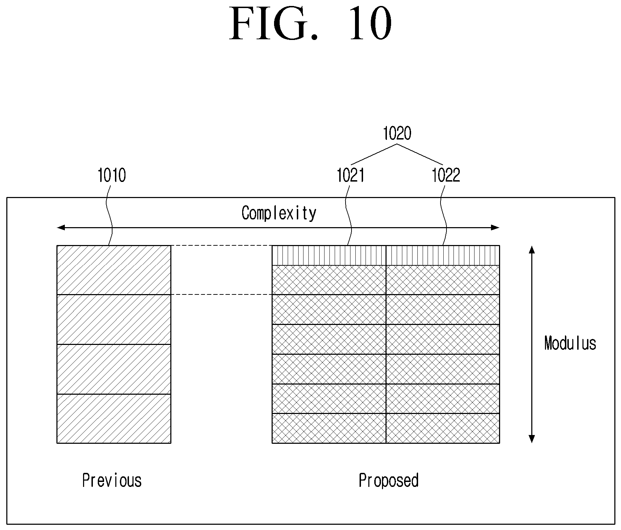

Also, the memory 110 may store the homomorphic ciphertext generated in the process described below. In this case, the memory 110 may store the homomorphic ciphertext in a form decomposed into the quotient data and the remainder data. This operation will be described in detail in FIG. 10.

In addition, the memory 110 may store data generated in the process described below, data generated in the middle, etc.

The processor 120 controls the respective components in the electronic apparatus 100. The processor 120 may be composed of a single device such as a central processing unit (CPU) and an application-specific integrated circuit (ASIC), or may be composed of a plurality of devices such as a CPU and a graphics processing unit (GPU).

When the message to be transmitted is input, the processor 120 stores the message in the memory 110. The processor 120 may use various setting values and programs stored in the memory 110 to homomorphically encrypt the message. In this case, the public key may be used.

The processor 120 may generate and use a public key required to perform encryption by itself, or may receive and use the public key from an external device. For example, the second server device 300 that performs the decryption may distribute a public key to other devices.

When generating a key by itself, the processor 120 may generate a public key using a Ring-LWE technique. Describing specifically, the processor 120 may first set various parameters and rings and store the parameters and rings in the memory 120. Examples of the parameters may include a length of bits of a plain text message, a dimension k, a rank k, a size of public and secret keys, and the like. There are various formats for the homomorphic ciphertext, and the processor 120 may set the ring according to the ciphertext method according to the method set by the user or the predetermined method. For example, the above-described homomorphic ciphertext scheme may be a CKKS scheme, a RLWE scheme, etc. Hereinafter, the operation based on the CKKS scheme will be described, but the main technology of this application may be modified and used for other schemes.

The ring may be expressed by the following Equation.

[Equation 2]

$$R = Z_q[X]/f(x)$$

Here, R denotes a ring, $Z_q$ denotes a coefficient, and f(x) denotes an n-th polynomial.

The ring is a set of polynomials having predetermined coefficients, and means a set in which addition and multiplication are defined between elements and which is closed for addition and multiplication. Such a ring may be referred to as an annulus.

For example, the ring means a set of n-th polynomials having a coefficient $Z_q$. Specifically, when n is $\Phi(N)$, it refers to polynomials that may be calculated as the remainder of dividing the polynomial by an N-th cyclotomic polynomial. f(x) denotes ideal of $Z_q[x]$ generated by the f(x). The Euler totient function $\Phi(N)$ means the number of natural numbers that is coprime to N and smaller than N. When $\Phi_N(x)$ is defined as an N-th cyclotomic polynomial, the ring may also be represented by Equation 3 as follows.

[Equation 3]

$$R = \frac{Z[x]}{(X)^N + 1}$$

Here, R is a ring, Rq = R/qR, N is the degree of the polynomial.

When such a ring is set, the processor 120 may calculate a secret key sk from the ring.

[Equation 4]

$$sk \leftarrow (1, s(x)), \ s(x) \ \in \ R$$

Here, s(x) means a polynomial generated randomly with small coefficients. Specifically, s may be derived using a Hamming weight h. The Hamming weight is the number of nonzero elements of s.

When the ring and secret key are selected, the processor 120 calculates a first random polynomial a(x) from the ring. The first random polynomial may be expressed as follows.

[Equation 5]

$$a(x) \leftarrow R$$

In addition, the processor 120 may calculate an error. Specifically, the processor 120 may extract an error from a discrete Gaussian distribution or a distribution statistically close to the discrete Gaussian distribution. This error may be expressed as follows.

[Equation 6]

$$e(x) \leftarrow D^n_{\alpha q}$$

When the error is calculated, a processor 450 may calculate a second random polynomial by performing a modular operation on the error in the first random polynomial and the secret key. The second random polynomial may be expressed as follows.

[Equation 7]

$$b(x) = -a(x)s(x) + e(x)(\mathrm{mod} \ q)$$

Finally, a public key pk is set as follows in a form including the first random polynomial and the second random polynomial.

[Equation 8]

$$pk = (b(x), \ a(x))$$

Since the above-described key generation method is only an example, it is not necessarily limited thereto, and it goes without saying that the public key and the secret key may be generated by other methods.

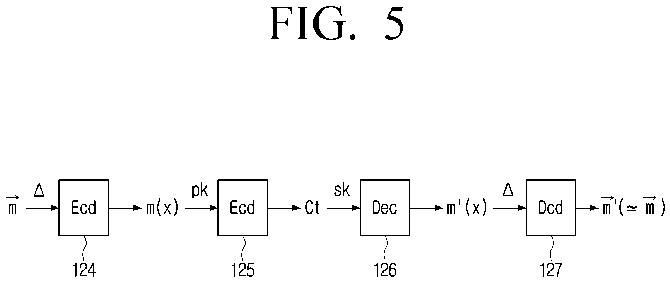

The processor 120 may generate a homomorphic ciphertext for a message. Specifically, the processor 120 may encode a message in a polynomial form and apply the public key to the message in the polynomial form to generate the ciphertext. A more specific operation will be described later in FIG. 5.

When the homomorphic ciphertext is generated, the processor 120 may control a communication device 410 to store the homomorphic ciphertext in the memory 110 or transmit the homomorphic ciphertext to another device according to a user request or a predetermined default command.

Meanwhile, according to an embodiment of the present disclosure, packing may be performed. When the packing is used in homomorphic encryption, it becomes possible to encrypt a plurality of messages into one ciphertext. In this case, when the electronic apparatus 100 performs an operation between each ciphertext, since operations for a plurality of messages are processed in parallel, the operation burden is greatly reduced.

Specifically, when a message is composed of a plurality of message vectors, the processor 120 may transform a plurality of message vectors into a polynomial in a form that the plurality of message vectors may be encrypted in parallel, multiply the polynomial by a scaling factor, and perform the homomorphic encryption using a public key. Accordingly, a ciphertext in which a plurality of message vectors are packed may be generated.

Further, when the homomorphic ciphertext needs to be decrypted, the processor 120 may apply a secret key to the homomorphic ciphertext to generate a decrypted message in the polynomial form, and decode the polynomial-type decrypted message to generate a message. In this case, the generated message may include an error as mentioned in Equation 1 described above.

The processor 120 may perform the operation on the ciphertext. Specifically, the processor 120 may perform operations such as addition or multiplication on the homomorphic ciphertext while maintaining the encrypted state for the homomorphic ciphertext.

Specifically, when the processor 120 performs the homomorphic multiplication operation among various homomorphic operations, the processor 120 may perform the operation using the homomorphic multiplication operation method according to the present disclosure.

The processor 120 may divide each of the plurality of homomorphic ciphertexts by the preset modulus to be decomposed into the quotient data and the remainder data. Specifically, the processor 120 may divide each of the plurality of homomorphic ciphertexts by the preset modulus to calculate the remainder data, and perform an operation of subtracting the calculated remainder data for each of the plurality of homomorphic ciphertexts and dividing the plurality of homomorphic ciphertexts by the preset modulus to calculate the quotient data.

Meanwhile, such a decomposition operation may be performed in advance before the above-described homomorphic operation. That is, the homomorphic ciphertext according to the present disclosure may be stored in a form in which the quotient data and the remainder data are decomposed differently from the conventional one.

The processor 120 may calculate the quotient operation data using the quotient data of each of the plurality of homomorphic ciphertexts and the plurality of intermediate operation results using the quotient data of one of the plurality of homomorphic ciphertexts and the remainder data of the other homomorphic ciphertext.

For example, the processor 120 may perform the tensor operation on the quotient data of each of the plurality of homomorphic ciphertexts to calculate one quotient operation data. The processor 120 may perform the tensor operation on the quotient data of one homomorphic ciphertext and the remainder data of the other homomorphic ciphertext to calculate the plurality of intermediate operation results, for each of the plurality of homomorphic ciphertexts.

The processor 120 may generate the homomorphic ciphertext according to the homomorphic multiplication operation result using the quotient operation data and the plurality of intermediate operation results.

Specifically, the processor 120 may re-linearize the quotient operation data to generate first linear data.

The processor 120 may sum the plurality of intermediate operation results and re-linearize the summed intermediate operation results to generate second linear data.

The processor 120 may generate the quotient data corresponding to the homomorphic multiplication operation result by using the first linear data. For example, the processor 120 may rescale the first linear data to generate the quotient data corresponding to the homomorphic multiplication operation result.

The processor 120 may generate the remainder data corresponding to the result of the homomorphic multiplication operation using the first linear data and the second linear data. For example, the processor 120 may generate the remainder data corresponding to the result of the homomorphic multiplication operation by, multiplying the first linear data with the preset modulus, summing the result of multiplying and the second linear data, rescaling the result of summing, subtracting result of multiplying rescaled of the first linear data with the preset modulus at the result of recalling the result of summing.

Meanwhile, when the size of the remainder data is larger than the modulus, the processor 120 may perform a recombine operation to make the size of the remainder data smaller than the modulus and reflect a value larger than the modulus in the quotient data. For example, when the size of the remainder data is larger than the modulus, the processor 120 may combine the remainder data and the quotient data to generate the homomorphic ciphertext in a general form, and perform the decomposition operation described above to perform the recombine operation.

The processor 120 may combine the decomposed quotient data and remainder data to generate the homomorphic ciphertext in a general form.

Meanwhile, the processor 120 may convert the homomorphic ciphertext. For example, when there are various forms of homomorphic ciphertexts, they have different dimensions or different ranks and may perform operations together. Therefore, the processor 120 may convert the input homomorphic ciphertext or the homomorphic ciphertext to be operated into an N-dimensional RLWE, a K-rank RLWE, or an N-dimensional K-rank RLWE so as to cover all dimensions and all ranks, and perform the operation processing using the converted ciphertext.

Meanwhile, when the operation is completed, the processor 120 may detect data in an effective area from the operation result data. Specifically, the processor 120 may detect the data in the effective area by performing rounding processing on the operation result data. The rounding processing means rounding-off a message in an encrypted state, and may also be referred to as rescaling.

Specifically, the processor 120 removes a noise area by multiplying each component of the ciphertext by $\Delta^{-1}$ which is the reciprocal of the scaling factor, and rounding-off each component of the ciphertext. The noise area may be determined to correspond to the size of the scaling factor. As a result, it is possible to detect a message in the effective area from which the noise area is excluded. Since it proceeds in the encrypted state, an additional error occurs, but the size is small enough to be negligible.

In addition, the processor 120 may perform the bootstrapping operation on the ciphertext when the proportion of the approximate message in the operated ciphertext exceeds a threshold. Specifically, the processor 120 may expand the modulus of the operated ciphertext, perform a first linear transformation of the homomorphic ciphertext with the expanded modulus into a polynomial form, approximate the first homomorphic ciphertext converted into the polynomial form using a function set to approximate the modulated range of the plain text, perform a second linear transformation of the approximated second homomorphic ciphertext into the homomorphic ciphertext, and perform a subtraction operation of the second homomorphic ciphertext obtained by the second linear transformation from the homomorphic ciphertext whose modulus has been expanded to generate the homomorphic ciphertext with an expanded plain text space.

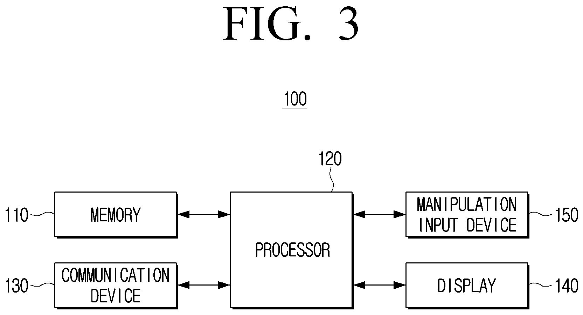

Meanwhile, only simple components constituting the electronic apparatus 100 have been illustrated and described hereinabove, but various components may be further included in the electronic apparatus 100 in at the time of implementing the electronic apparatus 100. This will be described below with reference to FIG. 3.

FIG. 3 is a block diagram for describing specific components of the electronic apparatus according to the exemplary embodiment of the present disclosure.

Referring to FIG. 3, the electronic apparatus 100 of the present disclosure may be composed of the memory 110, the processor 120, a communication device 130, a display 140, and a manipulation input device 150.

The memory 110 has been described with reference to FIG. 2, and thus, a duplicate description thereof will be omitted. In addition, the processor 120 has been described with reference to FIG. 2, and thus, the contents described in FIG. 2 will not be described in duplicate, and only the contents related to the configuration added to FIG. 3 will be described below.

The communication device 130 is formed to connect the electronic apparatus 100 to an external device (not illustrated), and may be connected to the external device through a local area network (LAN) and the Internet network or be connected to the terminal device through a universal serial bus (USB) port or a wireless communication (for example, wireless fidelity (WiFi), 802.11a/b/g/n, near field communication (NFC), or Bluetooth) port. Such a communication device 130 may also be referred to as a transceiver.

The communication device 130 may receive a public key from the external device and transmit the public key generated by the electronic apparatus 100 to the external device.

Also, the communication device 130 may receive a message from the external device and transmit the generated homomorphic ciphertext to the external device. Meanwhile, the communication device 130 may transmit or receive the homomorphic ciphertext to the external device in a general form, but may also transmit and receive the homomorphic ciphertext in a form decomposed into the quotient data and the remainder data as in the form of the present disclosure.

Also, the communication device 130 may receive various parameters required for generating a ciphertext from an external device. Meanwhile, upon implementation, various parameters may be directly received from a user through the manipulation input device 150 to be described later. For example, one of the above-described parameters may be a security parameter $\lambda$. Here, the security parameter may be used in the ring setup process.

The display 140 displays a user interface window for selecting a function supported by the electronic apparatus 100. Specifically, the display 140 may display a user interface window for selecting various functions provided by the electronic apparatus 100. This display 140 may be a monitor such as LCD, CRT, OLED, etc., and may also be implemented as a touch screen that may simultaneously perform the functions of the manipulation input device 150 to be described below.

The display 140 may display a message requesting input of parameters necessary for generating a secret key and a public key. Also, the display 140 may display a message in which an encryption target selects a message. Meanwhile, in implementation, the encryption target may be directly selected by a user or may be automatically selected. That is, personal information or the like that requires encryption may be automatically set even if a user does not directly select a message.

The manipulation input device 150 may receive a function selection of the electronic apparatus 100 and a control command for the function from the user. Specifically, the manipulation input device 150 may receive parameters necessary for generating a secret key and a public key from the user. Also, the manipulation input device 150 may receive the message to be encrypted from the user.

When the processor 120 receives parameters required for generating a secret key and a public key from the user, the processor 120 may generate setting parameters based on the input parameters and generate the secret key and the public key based on the generated setting parameters.

Also, when it is necessary to generate the ciphertext for the message, the processor 120 may apply the public key to the message to generate the homomorphic ciphertext. Specifically, the processor 120 may convert a message in a polynomial form and apply the public key to the converted message in the polynomial form to generate the homomorphic ciphertext.

Further, when the homomorphic ciphertext needs to be decrypted, the processor 120 may apply a secret key to the homomorphic ciphertext to generate a polynomial-type decrypted message, and decode the polynomial-type decrypted message to generate a message. **In** this case, the generated message may include an error as mentioned in Equation 1 described above.

Further, when the operation on the homomorphic ciphertext is required, the processor 120 may perform the addition or multiplication operation on the plurality of homomorphic ciphertexts that the user requests.

As described above, the electronic apparatus 100 according to the present embodiment may generate the homomorphic ciphertext in the message, and may improve the stability of the message even when the operation is required. In addition, since the generated homomorphic ciphertext includes errors, the stable security may be maintained even for biometric information that requires high security.

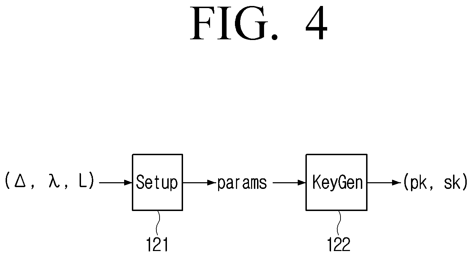

FIG. 4 is a diagram for describing the operation of generating a public key and a secret key.

Referring to FIG. 4, a setup module 121 may receive the scaling factor $\Delta$, the security parameter $\lambda$, and a level parameter L from a user. Here, the scaling factor $\Delta$ is a parameter that adjusts the size of the message and is greater than 1. And the security parameter $\lambda$ is an indicator of how stable the scheme is and may be referred to as computational complexity. The level parameter is an indicator of the depth that supports the operation.

The setup module 121 that receives the parameters described above may set moduli, randomly select an integer n and a positive number P, and output the setting parameters such as $(n,(q_i)_{1\le i\le L},P,\triangle)$.

A key generation module 122 may receive the setting parameters generated in the setup module 121 above and generate the secret key and the public key based on the input setting parameters.

Specifically, the key generation module 122 may produce the secret key and the error. In this case, the key generation module 122 may generate the secret key sk that satisfies Equation 4 described above.

The key generation module 122 may generate a first random polynomial and a second random polynomial.

The key generation module 122 may generate the public key pk using the generated parameter, the first random polynomial, and the second random polynomial.

In addition, the key generation module 122 may also generate a switching key swk.

[Equation 9]

$$swk = (b = [-a \cdot s + e + P \cdot s']_{PQ_L}, a)$$

Here, s' $\in$R is satisfied, swk is a switching key, b is a changed public key, a is a value (or the first random polynomial) sampled from $R_{PQL}$d, e is an error, and P is an auxiliary modulus.

In addition, the key generation module 122 may also generate an operation key required for the homomorphic operation.

FIG. 5 is a diagram for describing an operation of generating and decrypting an approximate homomorphic ciphertext.

Referring to FIG. 5, the encoding module 124 may receive a message m and the scaling factor $\Delta$, and convert the message into a polynomial form m(x) by reflecting the scaling factor. This polynomial form conversion operation may be expressed as the following Equation 10.

[Equation 10]

$$m(X) = \lceil \triangle \cdot can^{-1}(m) \rfloor$$

Here, m(x) is an encoded message, m is a message, $\Delta$ is a scaling factor, and may is an operation that satisfies the following Equation 11. This form conversion may be referred to as a linear conversion.

[Equation 11]

$$can : R[X]/(X^N+1) \to C^{N/2} \ by \ can(m(x)) = (m(\xi_j))_{(o \le j < N/2)}$$

Here, $\xi$ is a 2Nth root and $\xi_j = \xi^{5j}$ is satisfied.

The encryption module 125 may receive a message in a polynomial form and generate the homomorphic ciphertext by reflecting the public key in the received message. Specifically, the homomorphic ciphertext may be generated using the following Equation 12.

[Equation 12]

$$ct = [v \cdot pk + (m(X) + e_0, e_1)]_{(Q_{L_i})}$$

Here, v is a selected element, and $e_0$ and $e_1$ are selected error values.

A decryption module 126 may input the ciphertext and the secret key, decrypt the ciphertext, and output a message including an error. Specifically, the decryption module 126 may output a message in a polynomial form such as $m(x)=[<ct,sk>]_{Q_0}$ (where $Q_0$ is a basis modulus) when the input ciphertext is as $ct \in R^2_{Q_l}$.

Meanwhile, the message output from the decryption module 126 is a message in a polynomial form, and a decoding module 127 may finally output the message based on the message output from the decryption module 126 and the scaling factor. Specifically, the decryption module 126 may output a message such as $m=can(\triangle^{-1} \cdot m(X))$ when the polynomial message satisfies $m(x) \in R$.

FIG. 6 is a diagram for describing the bootstrapping operation of the present disclosure.

Specifically, FIG. 6 illustrates the operation and bootstrapping process for two homomorphic ciphertexts 10 and 20. The term reboot may be expressed as bootstrapping, plain text space expansion, or the like.

Each homomorphic ciphertext 10 and 20 may include approximate message areas 11 and 21, respectively. The approximate message areas 11 and 21 include messages and errors $m_1+e_1$ and $m_2+e_2$ together.

An electronic apparatus 400 may perform a specific operation using two homomorphic ciphertexts 10 and 20 as input values. Here, the specific operation may include homomorphic multiplication, homomorphic division, homomorphic addition, etc.

An operated ciphertext 30 may include an approximate message area 31 including an operation result $m_3+e_3$ between each approximate message. As the operation result becomes greater than the input value, the approximate message area also increases, so the remaining plain text space 32 decreases. When this operation is performed several times, the remaining plain text space 32 eventually disappears or becomes smaller than the limit value, so the operation may not be performed. When it is determined to be in this state, the electronic apparatus 400 may perform the bootstrapping operation.

In a bootstrapped ciphertext 40, it can be seen that an approximate message area 41 is constant and the plain text space 42 is extended.

In this way, the bootstrapping method may perform continuous operation processing for the homomorphic ciphertexts in that it extends the plain text space. The specific reboot operation is described with reference to FIG. 7.

FIG. 7 is a view for describing a bootstrapping operation according to an exemplary embodiment of the present disclosure. The bootstrapping operation described in FIG. 7 is meta bootstrapping, and the present disclosure describes a meta bootstrapping operation, but the bootstrapping may be performed in a different manner other than the corresponding operation.

Referring to FIG. 7, the homomorphic ciphertext 30 has the approximate message area 31 and the plain text space 32. The approximate message area 31 may include actual data and the error information e.

First, the electronic apparatus (or processor) may extend the modulus of the homomorphic ciphertext 30 to generate a modulus-extended ciphertext 51.

The electronic apparatus (or processor) may generate a first intermediate ciphertext 54 (or a bootstrapped homomorphic ciphertext) using the extended ciphertext 51. For example, when the first homomorphic ciphertext 30 is $CT_1 = m_1 + e_1$ ($m_1$ is message and $e_1$ is an error), the first intermediate ciphertext 54 may be $CT_1'= m_1+e_2= m_1 + 2^n e_1' + e_1$ (where $2^n e_1'$ is a boot strap error).

In addition, in order for the electronic apparatus (or processor) to check 'errors that exceed the error range allowed by the approximation algorithm' among errors included after the bootstrapping, that is, to check error values other than messages, the subtraction homomorphic operation is performed on two homomorphic ciphertexts 51 and 54 before and after the preset bootstrapping (or rebooting). Accordingly, a second intermediate ciphertext 61 may be generated. For example, the second intermediate ciphertext 61 may be $CT_2 = CT_1' - CT_1= e_2- e_1 = 2^n e_1' - e_1$.

The electronic apparatus (or processor) performs a preset bootstrapping operation on the second intermediate ciphertext 61. The bootstrapping operation preset in this way may be the generally known existing bootstrapping operation, or may be a partially modified existing bootstrapping operation described later in the present disclosure. Here, the bootstrapping process may be the same as the bootstrapping method applied to a first homomorphic ciphertext $CT_1$, or may be a different method. Accordingly, a third intermediate ciphertext 62 may be generated. For example, the third intermediate ciphertext 62 may be $CT_3 = Bootstrapping (CT_2) = e_3 = 2^n e_1' + e_4$.

Since the third intermediate ciphertext 62 is an error that has passed through the approximation algorithm, it may be regarded as 'an error exceeding the error range allowed by the approximation algorithm' described above. Therefore, when the third intermediate ciphertext 62 is finally subtracted from the first intermediate ciphertext 54, it is possible to generate the homomorphic ciphertexts having only an error within the error range allowed by the approximation algorithm. That is, $CT_1'' = CT_1' - CT_3 = (m_1 + 2^n e_1) - (2^n e_1 + e_4) = m_1 - e_4$.

In this way, the homomorphic ciphertext bootstrapped through the meta bootstrapping process has only an error within the error range allowed by the approximation algorithm.

FIG. 8 is a diagram for describing an operation of decomposing homomorphic ciphertext of the present disclosure.

Referring to FIG. 8, the homomorphic ciphertext for the two homomorphic ciphertexts 10 and 20 is illustrated.

The two homomorphic ciphertexts 10 and 20 may be decomposed into the preset modulus. For example, the remainder data may be generated by performing an operation such as the following Equation 13.

[Equation 13]

$$remain_{2^k} := (\lfloor b \rceil_{2^k}, \lfloor a \rceil_{2^k}) \in R^2$$

Here, the homomorphic ciphertext ct = (b, a), and $2^k$ is the modulus applied to the homomorphic ciphertext. Meanwhile, in the above, although $2^k$ (i.e., power of 2) is used as the modulus, it is also possible to use a natural number other than the power of 2 during implementation.

The remainder data is data corresponding to the remainder value of the result of dividing the homomorphic ciphertext by the preset modulus.

The quotient data may be generated by performing an operation such as Equation 14.

[Equation 14]

$$rescale_{2^k} := \frac{ct - remain_{2^k}(ct)}{2^k} \in R^2_{Q/2}$$

The quotient data is the result of performing a subtraction operation on the homomorphic ciphertext by the remainder data and dividing the result by the preset modulus $2^k$, as described in the above Equation 14.

In this way, when quotient data 13 and 23 and remainder data 14 and 24 for the two homomorphic ciphertexts 10 and 20 are prepared, the operation between the quotient data 13 and 23, the operation between the quotient data 13 and 23 for one of the homomorphic ciphertexts 10 and 20 and the remainder data 24 and 14 for the other of the homomorphic ciphertext 20 and 10, and the operation between the remainder data may be performed, and the results may be summed to perform the homomorphic multiplication operation on the two homomorphic ciphertexts.

Meanwhile, the product between the remainder data may be ignored because it is smaller than the error range allowed by the homomorphic ciphertext.

Therefore, the homomorphic multiplication operation on the two homomorphic ciphertexts 10 and 20 may be composed of the operation between the two quotient data 13 and 23, the operation between the quotient data 13 of one homomorphic ciphertext 10 and the remainder data 24 of the other homomorphic ciphertext 20, and the operation between the quotient data 23 of one homomorphic ciphertext 20 and the remainder data 14 of the other homomorphic ciphertext 10.

Meanwhile, although the illustrated example illustrates the multiplication operation using the two homomorphic ciphertexts, the above-described method may also be applied to the operations of three or more homomorphic ciphertexts.

The homomorphic multiplication operation of the two homomorphic ciphertexts is described in more detail with reference to FIG. 9.

FIG. 9 is a flowchart for describing the homomorphic multiplication method of the present disclosure.

Specifically, FIG. 9 illustrates an example of the operation of the homomorphic multiplication operation for the two homomorphic ciphertexts 10 and 20.

First, each of the two homomorphic ciphertexts 10 and 20 may be decomposed into the quotient data 13 and 23 and the remainder data 14 and 24.

The operation between the quotient data 13 and 24 may be performed, and the operation between the quotient data and the remainder data may be performed. Here, the operation is a tensor operation, and this tensor operation may be used in the following Equation 15.

[Equation 15]

$$ct_{ten} = ct \otimes ct' = ([b \cdot b']_{Q_l}, -[a \cdot b' + a' \cdot b]_{Q_l}, [a \cdot a']_{Q_l}) \in R^3_{Q_l}$$

Here, ct = (b, a) and ct' = (b', a'). This $Ct_{ten}$ is an operation that satisfies the following Equation 16.

[Equation 16]

$$(m+e)(m'+e')=b \cdot b'-(a \cdot b'+a' \cdot b) \cdot s+a \cdot a' \cdot s^2=ct_{ten} \cdot (1,s,s^2)$$

Here, s is a polynomial (or vector) randomly generated with a small coefficient, which is used to generate the public key (or secret key) described above.

Through this operation, temporary quotient operation data 71 using the quotient data of each of the plurality of homomorphic ciphertexts may be generated. Among the plurality of homomorphic ciphertexts, the quotient data of one homomorphic ciphertext and the remainder data of the other homomorphic ciphertext may be used to generate the plurality of intermediate operation results. The plurality of intermediate operation results may be summed to generate the summed intermediate operation result 72 (or temporary remainder operation data).

Meanwhile, when the relinearization operation and the rescaling operation are individually applied to each decomposed quotient data and remainder data, an error may be added to the quotient data. Therefore, in the present disclosure, the relinearization and rescaling may be performed in the following manner to prevent additional errors from being added to the quotient data.

Specifically, the relinearization operation is as illustrated in the following Equation 17, and the rescaling operation is as illustrated in the following Equation 18.

[Equation 17]

$$Relin(\widehat{ct},\widecheck{ct})=DCP_{2^k}(Relin(2^k \cdot \widehat{ct}))+(0,Relin(\widecheck{ct}))$$

Here, Relin is a rescaling operator, the ciphertext is

$$ct=2^k \cdot \widehat{ct}+\widecheck{ct}, \quad \widehat{ct}$$

is the quotient data,

$$\widecheck{ct}$$

is the remainder data, and DCP is a decomposition operator of the homomorphic ciphertext.

For example, the quotient operation data 71 may be re-linearized to generate the first linear data, and the summed intermediate operation result 72 may be re-linearized to generate the second linear data.

[Equation 18]

$$RS_{q_i}(\widehat{ct},\widecheck{ct})=(RS_{q_i}(\widehat{ct}),RS_{q_i}(2^k \cdot \widehat{ct}+\widecheck{ct})-2^k \cdot RS_{q_i}(\widehat{ct}))$$

Here, RS is a re-linearization processing operator, the ciphertext is

$$ct=2^k \cdot \widehat{ct}+\widecheck{ct}, \quad \widehat{ct}$$

is the quotient data, and

$$\widecheck{ct}$$

is the remainder data.

For example, the first linear data may be rescaled to generate quotient data 81 corresponding to the homomorphic multiplication operation result, and a remainder data 82 corresponding to the homomorphic multiplication operation result may be generated by subtracting 'the result of calculating the result of rescaling the first linear data and the product of the preset modulus' from the result of rescaling the result of summing the first linear data, the product of the preset modulus, and the second linear data.

Meanwhile, in the present disclosure, the homomorphic ciphertext is processed by being decomposing into the quotient data and the remainder data. When the above-described decomposition and recombining operations are performed in every homomorphic encryption operation process, the time increase and modulus increase may occur due to the above-described conversion.

To prevent this, in the present disclosure, the decomposition state may be maintained during the entire homomorphic operation process, or the decomposed state described above may be maintained during the data storage process. The effect of this operation is described below with reference to FIG. 10.

FIG. 10 is a diagram for describing a difference between the conventional operation method and an operation method of the present disclosure.

When performing the homomorphic multiplication operation in the conventional method, as illustrated, when the homomorphic multiplications are performed four times, the modulus is completely exhausted. In other words, when the homomorphic multiplication operations are performed four times in the conventional method, the bootstrapping operation should be performed.

On the other hand, although additional modulus consumption occurs in the process of decomposing the initial homomorphic ciphertext (1021 and 1022), the modulus consumption in each homomorphic multiplication process is about half that of the conventional method, so that the homomorphic multiplication operations may be performed approximately 6 times.

In addition, not only the homomorphic multiplication operation, but also the homomorphic addition, constant operation, etc., may be performed in a state where the quotient data and the remainder data are separated, so the above-described decomposition operation only needs to be performed only once in the entire operation process.

Furthermore, since the homomorphic operation supports a parallel operation, etc., even if the complexity increases due to the above-described operation, the decrease in operation speed is not significant, and since the bootstrapping operation that takes a lot of time in the homomorphic operation process may be significantly reduced, there is an effect of reducing the overall operation time in the process of processing the complex homomorphic operation algorithm.

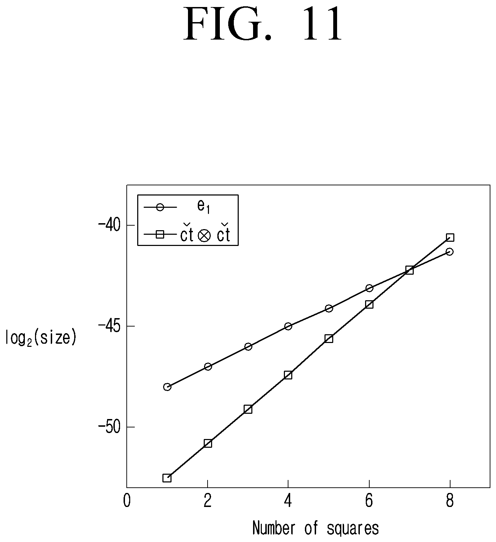

FIG. 11 is a diagram for describing an effect of the homomorphic multiplication method of the present disclosure.

Specifically, FIG. 11 illustrates the form of the error increase due to the homomorphic multiplication operation using the conventional method and the method according to the present disclosure. The parameters used in the simulation results illustrated in FIG. 11 are as shown in Table 1.

[Table 1]

| enum | N | h | $\log_2(QP)$ | $\log_2(q)$ | | | $\log_2(p)$ |
|------|------|-----|--------------|------|------|-----|-------------|
| | | | | Base | Mult | Div | |
| 1 | 2^15 | 128 | 610 | 61 | 61x8 | - | 61 |
| 2 | 2^15 | 128 | 449 | 61 | 38x8 | 23 | 61 |

The existing multiplication operation may increase the error by up to 1 bit, and it may be confirmed that the homomorphic multiplication method according to the present disclosure increases by up to 1.7 bits. This is based on the amount discarded in the tensor operation process. In this respect, as illustrated, the operation according to the present disclosure has a smaller error before a 7th step, but it may be confirmed that the error size becomes larger than the existing method after perform the operation 7 times. Therefore, when applying the present disclosure, when the 7th homomorphic multiplication operation is performed, the precision may be maintained through the recombination and re-decomposition.

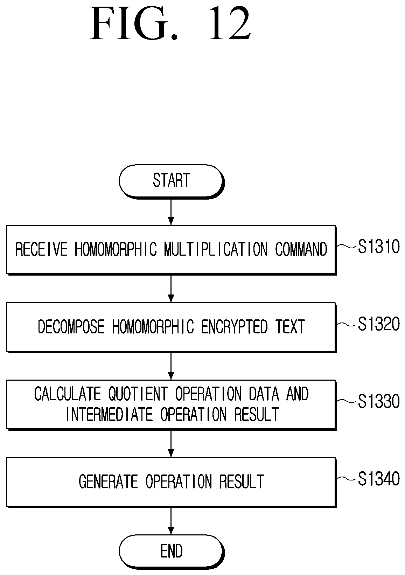

FIG. 12 is a flowchart for describing an operation of extending a plain text space of the present disclosure.

Referring to FIG. 12, a command for the homomorphic multiplication operation for the plurality of homomorphic ciphertexts is input (S1310). Such a command may be a command for performing only the homomorphic multiplication operation, or may be a command for performing the plurality of homomorphic operations including the homomorphic multiplication operation.

Each of the plurality of homomorphic ciphertexts is divided by the preset modulus to be decomposed into the quotient data and the remainder data (S1320). Each of the plurality of homomorphic ciphertexts may be divided by the preset modulus to calculate the remainder data, and the operation of subtracting the calculated remainder data for each of the plurality of homomorphic ciphertexts and dividing the plurality of homomorphic ciphertexts by the preset modulus may be performed to calculate the quotient data. This decomposition may be performed in the process of performing the above-described multiplication operation, or may have been performed in advance.

The plurality of homomorphic ciphertexts is divided by the preset modulus to be decomposed into the quotient data and the remainder data to calculate the quotient operation data using the quotient data of each of the plurality of homomorphic ciphertexts and the plurality of intermediate operation results using the quotient data of one of the plurality of homomorphic ciphertexts and the remainder data of the other homomorphic ciphertext (S1330).

Specifically, the tensor operation may be performed on the quotient data of each of the plurality of homomorphic ciphertexts to calculate one quotient operation data, and the tensor operation may be performed on the quotient data of one homomorphic ciphertext and the remainder data of the other homomorphic ciphertext to calculate the plurality of intermediate operation results, for each of the plurality of homomorphic ciphertexts.

The quotient operation data and the plurality of intermediate operation results are used to generate the homomorphic ciphertext according to the homomorphic multiplication operation result. Specifically, the quotient operation data may be re-linearized to generate the first linear data, add the plurality of intermediate operation results, and re-linearize the added intermediate operation results to generate the second linear data, and use the first linear data to generate the quotient data corresponding to the homomorphic multiplication operation result and use the first linear data and the second linear data to generate the remainder data corresponding to the homomorphic multiplication operation result.

Meanwhile, the method for processing an ciphertext according to various embodiments described above may be implemented in the form of program code for performing each step, and stored and distributed in a recording medium. In this case, the device equipped with the recording medium may perform operations such as the above-described encryption or ciphertext processing.

Such a recording medium may be various types of computer readable media such as ROM, RAM, memory chip, memory card, external hard, hard, CD, DVD, magnetic disk, or magnetic tape.

Although the present disclosure has been described with reference to the accompanying drawings, the scope of the present disclosure is determined by the claims to be described below and should not be construed as being limited to the foregoing embodiments and/or drawings. In addition, it should be clearly understood that improvements, changes and modifications obvious to those skilled in the art of the disclosure described in the claims are also included in the scope of the present disclosure.

**Claims**

1. An electronic device, comprising:

   a memory configured to store a plurality of homomorphic ciphertexts; and
   a processor configured to perform a homomorphic multiplication operation on the plurality of homomorphic ciphertexts,
   wherein the processor is configured to use the plurality of homomorphic ciphertexts divided by a preset modulus to be decomposed into quotient data and remainder data so as to generate quotient operation data using the quotient data of each of the plurality of homomorphic ciphertexts and a plurality of intermediate operation results using the quotient data of one of the plurality of homomorphic ciphertexts and the remainder data of the other homomorphic ciphertext, and
   use the quotient operation data and the plurality of intermediate operation results to generate the homomorphic ciphertext according to the homomorphic multiplication operation result.

2. The electronic apparatus as claimed in claim 1, wherein the processor is configured to divide each of the plurality of homomorphic ciphertexts by the preset modulus to calculate the remainder data, and perform an operation of subtracting the calculated remainder data on each of the plurality of homomorphic ciphertexts and dividing the results of subtraction operation subtracting calculated results by the preset modulus to calculate the quotient data.

3. The electronic apparatus as claimed in claim 1, wherein the processor is configured to perform a tensor operation on the quotient data of each of the plurality of homomorphic ciphertexts to generate one quotient operation data, and perform the tensor operation on the quotient data of one of the homomorphic ciphertext and the remainder data of the other homomorphic ciphertext to generate the plurality of intermediate operation results, for each of the plurality of homomorphic ciphertexts.

4. The electronic apparatus as claimed in claim 1, wherein the processor is configured to re-linearize the quotient operation data to generate first linear data,

sum the plurality of intermediate operation results, and re-linearize the summed intermediate operation results to generate second linear data, and
use the first linear data to generate the quotient data corresponding to the homomorphic multiplication operation result and use the first linear data and the second linear data to generate the remainder data corresponding to the homomorphic multiplication operation result.

5. The electronic apparatus as claimed in claim 4, wherein the processor is configured to re-scale the first linear data to generate the quotient data corresponding to the homomorphic multiplication operation result, and
generate the remaining data corresponding to the homomorphic multiplication by, multiplying the first linear data with the preset modulus, summing the result of multiplying and the second linear data, rescaling the result of summing, subtracting result of multiplying rescaled of the first linear data with the preset modulus at the result of recalling the result of summing.

6. The electronic apparatus as claimed in claim 1, wherein the processor is configured to store the homomorphic ciphertext according to the homomorphic multiplication operation result by dividing the homomorphic ciphertext into the generated quotient data and remainder data.

7. The electronic apparatus as claimed in claim 1, wherein the processor is configured to divide each of the plurality of homomorphic ciphertexts by the preset modulus to be decomposed into the quotient data and the remainder data.

8. The electronic apparatus as claimed in claim 1, wherein the memory is configured to store each of the plurality of homomorphic ciphertexts in a form in which the plurality of homomorphic ciphertexts are divided by the preset modulus to be decomposed into the quotient data and the remainder data.

9. The electronic apparatus as claimed in claim 1, wherein the preset modulus is the homomorphic ciphertext that is a modulus applied to the plurality of homomorphic ciphertexts.

10. A method for processing a ciphertext in an electronic device, comprising:

receiving a command for a homomorphic multiplication operation on a plurality of homomorphic ciphertexts;
calculating quotient operation data using quotient data of each of the plurality of homomorphic ciphertexts and a plurality of intermediate operation results using the quotient data of one of the plurality of homomorphic ciphertexts and using remainder data of the other homomorphic ciphertext, by using the plurality of homomorphic ciphertexts divided by a preset modulus to be decomposed into the quotient data and remainder data; and
generating the homomorphic ciphertext according to a homomorphic multiplication operation result by using the quotient operation data and the plurality of intermediate operation results.

11. The method as claimed in claim 10, further comprising:

dividing each of the plurality of homomorphic ciphertexts by the preset modulus to be decomposed into the quotient data and the remainder data,
wherein, in the decomposing, each of the plurality of homomorphic ciphertexts is divided by the preset modulus to calculate the remainder data, a subtraction operation is performed on the calculated remainder data for each of the plurality of homomorphic ciphertexts, and the quotient data is calculated by performing an operation of dividing the results of subtraction operation by the preset modulus.

12. 12. The method as claimed in claim 10, wherein the calculating includes:

performing a tensor operation on the quotient data of each of the plurality of homomorphic ciphertexts to calculate one quotient operation data; and
performing the tensor operation on the quotient data of one homomorphic ciphertext and the remainder data of the other homomorphic ciphertext to calculate the plurality of intermediate operation results, for each of the plurality of homomorphic ciphertexts.

13. The method as claimed in claim 10, wherein the generating of the homomorphic ciphertext includes:

re-linearizing the quotient operation data to generate first linear data;
summing the plurality of intermediate operation results, and re-linearizing the summed intermediate operation results to generate second linear data;
generating the quotient data corresponding to the homomorphic multiplication operation result using the first linear data; and
generating the remainder data corresponding to the homomorphic multiplication operation result using the first linear data and the second linear data.

14. The method as claimed in claim 13, wherein in the generating of the quotient data, the first linear data is re-scaled to generate the quotient data corresponding to the homomorphic multiplication operation result, and
in the generating of the remainder data, the remainder corresponding the homomorphic multiplication operation result is generated by, multiplying the first linear data with the preset modulus, summing the result of multiplying and the second linear data, rescaling the result of summing, subtracting result of multiplying rescaled of the first linear data with the preset modulus at the result of recalling the result of summing.

15. A computer-readable recording medium including a program for executing a method for processing a ciphertext, wherein the method for processing the ciphertext includes:

receiving a command for a homomorphic multiplication operation on a plurality of homomorphic ciphertexts;
calculating quotient operation data using quotient data of each of the plurality of homomorphic ciphertexts and a plurality of intermediate operation results using the quotient data of one of the plurality of homomorphic ciphertexts and the remainder data of the other homomorphic ciphertext, by using the plurality of homomorphic ciphertexts divided by a preset modulus to be decomposed into the quotient data and remainder data; and
generating the homomorphic ciphertext according to a homomorphic multiplication operation result by using the quotient operation data and the plurality of intermediate operation results.

# FIG. 1

200

FIRST SERVER
DEVICE

$Ct_1, Ct_2$ ↑  $Ct_1 + Ct_2$ ↓

10 — NETWORK

$Ct_1 + Ct_2$ →

300

SECOND SERVER
DEVICE

$Ct_1$  $Ct_2$

ELECTRONIC
DEVICE 1

ELECTRONIC
DEVICE 2

. . .

ELECTRONIC
DEVICE n

100-1  100-2  100-n

# FIG. 2

100

110

120

MEMORY ←→ PROCESSOR

# FIG. 3

<u>100</u>

# FIG. 4

$(\Delta, \lambda, L) \longrightarrow$ | Setup | $\longrightarrow$ params $\longrightarrow$ | KeyGen | $\longrightarrow (pk, sk)$

121　　　　　　　　122

# FIG. 5

$$\vec{m} \xrightarrow{\Delta} \boxed{\text{Ecd}} \xrightarrow{} m(x) \xrightarrow{pk} \boxed{\text{Ecd}} \xrightarrow{} Ct \xrightarrow{sk} \boxed{\text{Dec}} \xrightarrow{} m'(x) \xrightarrow{\Delta} \boxed{\text{Dcd}} \xrightarrow{} \vec{m}'(\simeq \vec{m})$$

124        125        126        127

# FIG. 6

# FIG. 7

# FIG. 8

# FIG. 9

# FIG. 10

# FIG. 11

# FIG. 12

```
            ┌─────────────┐
            │    START     │
            └──────┬──────┘
                   │
                   ▼
    ┌──────────────────────────────────────────┐
    │ RECEIVE HOMOMORPHIC MULTIPLICATION COMMAND │──S1310
    └──────────────────┬───────────────────────┘
                       │
                       ▼
    ┌──────────────────────────────────────────┐
    │      DECOMPOSE HOMOMORPHIC ENCRYPTED TEXT  │──S1320
    └──────────────────┬───────────────────────┘
                       │
                       ▼
    ┌──────────────────────────────────────────┐
    │    CALCULATE QUOTIENT OPERATION DATA AND   │──S1330
    │       INTERMEDIATE OPERATION RESULT        │
    └──────────────────┬───────────────────────┘
                       │
                       ▼
    ┌──────────────────────────────────────────┐
    │         GENERATE OPERATION RESULT          │──S1340
    └──────────────────┬───────────────────────┘
                       │
                       ▼
            ┌─────────────┐
            │     END      │
            └─────────────┘
```

## INTERNATIONAL SEARCH REPORT

| International application No. |
|---|
| **PCT/KR2023/020879** |

| A. | CLASSIFICATION OF SUBJECT MATTER |
|---|---|

**H04L 9/00**(2006.01)i

According to International Patent Classification (IPC) or to both national classification and IPC

| B. | FIELDS SEARCHED |
|---|---|

Minimum documentation searched (classification system followed by classification symbols)

H04L 9/00(2006.01); G06F 21/60(2013.01); G06F 7/02(2006.01); H04L 9/14(2006.01); H04L 9/30(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 동형 암호문(homomorphic ciphertext), 동형 곱셈 연산(homomorphic multiplication operation), 모듈러스(modulus), 몫 데이터(quotient data), 나머지 데이터(rest data)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | US 2021-0058229 A1 (THE BOARD OF REGENTS OF THE UNIVERSITY OF TEXAS SYSTEM et al.) 25 February 2021 (2021-02-25)<br>See paragraphs [0063]-[0065]; and figure 7. | 1-15 |
| A | KR 10-2021-0130044 A (SAMSUNG SDS CO., LTD.) 29 October 2021 (2021-10-29)<br>See paragraph [0060]; and figure 4. | 1-15 |
| A | KR 10-2021-0118717 A (SAMSUNG SDS CO., LTD.) 01 October 2021 (2021-10-01)<br>See paragraphs [0082]-[0088]; and figure 3. | 1-15 |
| A | KR 10-2021-0067961 A (KOREA UNIVERSITY RESEARCH AND BUSINESS FOUNDATION) 08 June 2021 (2021-06-08)<br>See paragraphs [0034]-[0039]; and figure 3. | 1-15 |
| A | US 2017-0134156 A1 (MICROSOFT TECHNOLOGY LICENSING, LLC) 11 May 2017 (2017-05-11)<br>See paragraphs [0037]-[0044]; and figure 2. | 1-15 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 March 2024** | **15 March 2024** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/020879**

| Patent document cited in search report | | | Publication date (day/month/year) | Patent family member(s) | | | Publication date (day/month/year) |
|---|---|---|---|---|---|---|---|
| US | 2021-0058229 | A1 | 25 February 2021 | US | 11431470 | B2 | 30 August 2022 |
| KR | 10-2021-0130044 | A | 29 October 2021 | EP | 3902193 | A1 | 27 October 2021 |
| | | | | EP | 3902193 | A4 | 27 October 2021 |
| | | | | US | 11509453 | B2 | 22 November 2022 |
| | | | | US | 2021-0328764 | A1 | 21 October 2021 |
| KR | 10-2021-0118717 | A | 01 October 2021 | EP | 3886354 | A1 | 29 September 2021 |
| | | | | US | 11277257 | B2 | 15 March 2022 |
| | | | | US | 2021-0297232 | A1 | 23 September 2021 |
| KR | 10-2021-0067961 | A | 08 June 2021 | KR | 10-2491902 | B1 | 27 January 2023 |
| US | 2017-0134156 | A1 | 11 May 2017 | US | 10075289 | B2 | 11 September 2018 |
| | | | | WO | 2017-079237 | A1 | 11 May 2017 |

Form PCT/ISA/210 (patent family annex) (July 2022)